# EUROPEAN PATENT SPECIFICATION

(11) **EP 2 226 241 B1**
(45) Date of publication and mention of the grant of the patent: **11.05.2011**
(21) Application number: 10154804.8
(22) Date of filing: 26.02.2010
(51) Int. Cl.: B62J 17/04, B62J 99/00

(54) **Motorcycle including vehicle registration plate at front thereof**
Motorrad mit einem Fahrzeugnummernschild an der Vorderseite
Motocyclette avec plaque d'immatriculation à l'avant

(30) Priority: 05.03.2009 JP 2009052581
(43) Date of publication of application: 08.09.2010
(73) Proprietor: Yamaha Hatsudoki Kabushiki Kaisha, Shizuoka-ken Shizuoka 438-8501 (JP)
(72) Inventor: Okamoto, Hideko c/o Yamaha Hatsudoki Kabushiki Kaisha, Shizuoka-ken Shizuoka 438-8501 (JP)
(74) Representative: Schoppe, Fritz

(56) References cited:
- WO-A2-2008/065676
- US-A1- 2009 127 884

## Description

### BACKGROUND OF THE INVENTION

### Field of the invention

The present invention relates to a motorcycle including a vehicle registration plate provided at the front of the motorcycle, and more specifically to an improvement to the position of a vehicle registration plate.

### Description of the Background Art

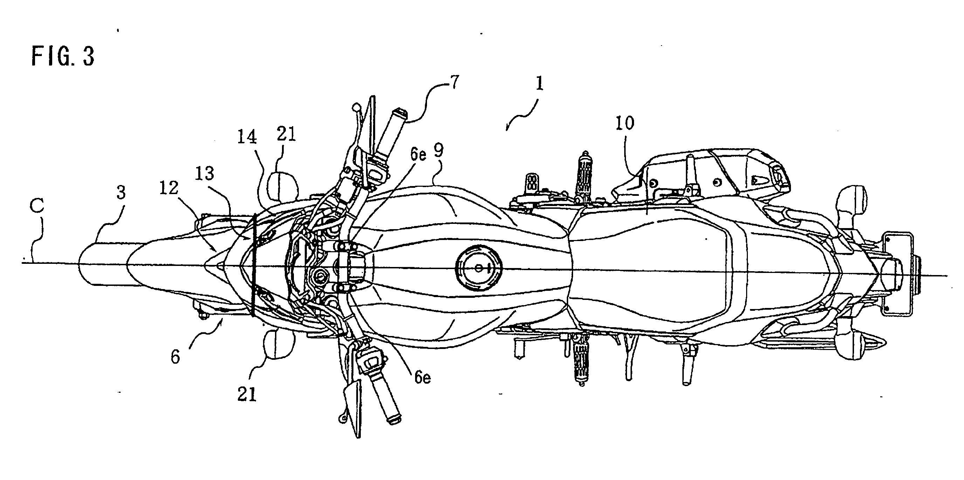

JP 6-298144 A discloses a motorcycle including a vehicle registration plate at the front of the motorcycle. The vehicle registration plate is also generally called a "number plate" or "license plate." In the motorcycle disclosed by JP 6-298144 A, the upper end of a front fork that supports a front wheel is coupled to a head pipe through a bottom bridge and a top bridge. The front of the head pipe is covered with a front cowling. A headlight and a meter such as a speed meter are provided in the front cowling. A rod is extended forward at the front of the bottom bridge and a plate stage for a front number is provided at the tip end of the rod (see paragraph [0012] and Fig. 3).

### SUMMARY OF THE INVENTION

It is an object of the present invention to provide a motorcycle having a headpipe, a headlight unit and a vehicle registration plate. A motorcycle according to the present invention includes a head pipe, a headlight unit, a meter unit, a meter visor, and a vehicle registration plate. The headlight unit is provided in front of the head pipe and includes a headlight. The meter unit is provided above the head pipe and includes a meter panel. The meter visor is provided in front of the meter unit. The vehicle registration plate is attached on the meter visor, above the meter vior.

According to the present invention, the headlight unit and the meter unit can be positioned near the center of gravity of the motorcycle while preventing the vehicle registration plate provided at the front of the motorcycle from coming within sight of the rider.

### BRIEF DESCRIPTION OF THE DRAWINGS

Fig. 1 is a left side view of the overall structure of a motorcycle according to a preferred embodiment of the present invention.
Fig. 2 is a front view of the motorcycle shown in Fig. 1.
Fig. 3 is a plan view of the motorcycle shown in Fig. 1.
Fig. 4 is a left side view of a headlight unit, a meter unit, a meter visor, and a vehicle registration plate shown in Fig. 1.
Fig. 5 is a front view of the headlight unit, the meter visor, and the vehicle registration plate shown in Fig. 4.
Fig. 6 is a perspective view of the headlight unit, the meter unit, the meter visor, and the vehicle registration plate shown in Fig. 4.
Fig. 7 is a left side view of the side cover of the headlight unit shown in Fig. 4.
Fig. 8 is a plan view of the side cover shown in Fig. 7.
Fig. 9 is a side view of the top cover of the headlight unit shown in Fig. 4.
Fig. 10 is a plan view of the top cover shown in Fig. 9.
Fig. 11 is a sectional view taken along line XI-XI in Fig. 5.
Fig. 12 is a perspective view of the meter unit, the meter visor, and the vehicle registration plate shown in Fig. 4 when viewed in the XII direction in Fig. 4.
Fig. 13 is a side view of the meter visor shown in Fig. 4.
Fig. 14 is a plan view of the meter visor shown in Fig. 13.
Fig. 15 is a front view of a headlight stay and a meter bracket shown in Fig. 4.
Fig. 16 is a left side view of the headlight stay and the meter bracket shown in Fig. 15.
Fig. 17 is a bottom view of the headlight stay shown in Fig. 15.
Fig. 18 is a plan view of the meter bracket shown in Fig. 15.
Fig. 19 is a front view of a visor bracket shown in Fig. 4.
Fig. 20 is a side view of the visor bracket shown in Fig. 19.
Fig. 21 is a partial front view of a plate bracket shown in Fig. 4.
Fig. 22 is a side view of the plate bracket shown in Fig. 21.

### DETAILED DESCRIPTION OF THE PREFERRED EMBODIMENTS

A preferred embodiment of the present invention will be described in detail in conjunction with the accompanying drawings in which the same or corresponding elements are designated by the same reference characters and their description will not be repeated.

In the following description, the "front," "rear," "right," and "left" refer to these directions as viewed from a rider on a seat unless otherwise specified.

### Overall Structure

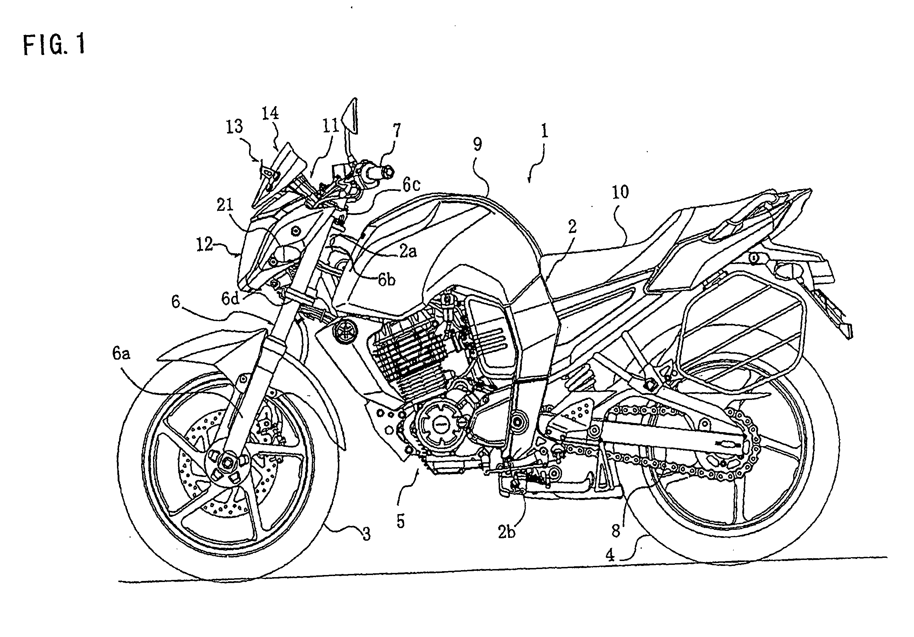

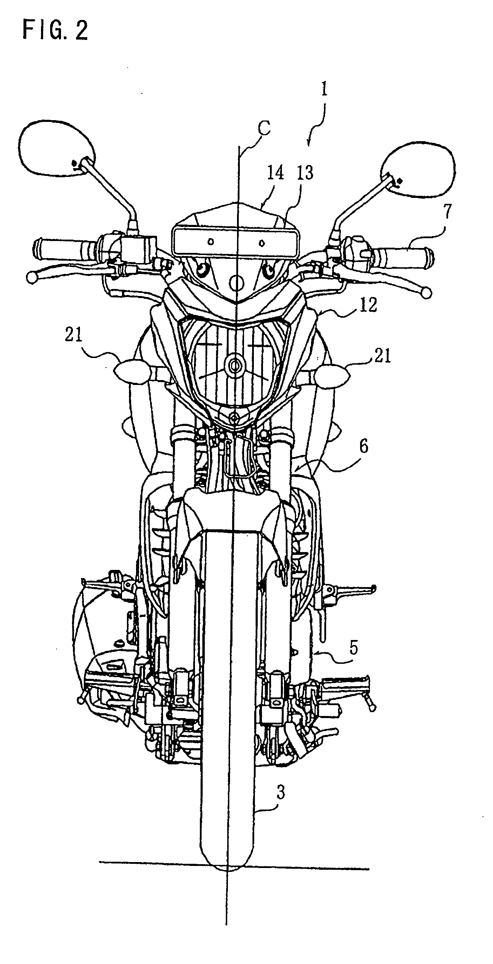

Referring to Figs. 1 to 3, a motorcycle 1 includes a body frame 2, a front wheel 3, a rear wheel 4, an engine 5, a front fork 6, a handle 7, a rear arm 8, a fuel tank 9, and a seat 10. The front wheel 3 and the rear wheel 4 are supported by the body frame 2. The engine 5 is supported by the body frame 2 and provided between the front wheel 3 and the rear wheel 4.

The motorcycle 1 further includes a head pipe 2a. The head pipe 2a is formed at the front end of the body frame 2. The front fork 6 is supported rotatably at the head pipe 2a. The front fork 6 includes outer tubes 6a and inner tubes 6b. The front wheel 3 is supported rotatably at the lower ends of the outer tubes 6a. The two inner tubes 6b on the right and left are coupled by an upper bracket 6c and a lower bracket 6d. A handle 7 is attached to the upper bracket 6c through handle crowns 6e shown in Fig. 3. Therefore, the handle 7 is supported so that it can steer rightward or leftward around the steering shaft of the front fork 6. The rear arm 8 is swingably supported upward or downward around the rear arm bracket 2b of the body frame 2. The rear wheel 4 is supported rotatably at the rear end of the rear arm 8. The engine 5 is for example a water-cooling type, four-cycle single cylinder engine. The engine 5 is supported at the main frame (not shown) and the rear arm bracket 2b of the body frame 2. The fuel tank 9 is provided above the engine 5. The seat 10 is provided behind the fuel tank 9.

The motorcycle 1 further includes a meter unit (also referred to as a "meter assembly") 11, a headlight unit (also referred to as a "headlight assembly") 12, a vehicle registration plate 13 (also referred to as a "number plate" or "license plate") 13, a meter visor 14, and winkers 21.

The meter unit 11 is provided above and in front of the head pipe 2a. The headlight unit 12 is provided in front of the head pipe 2a. More specifically, the headlight unit 12 is provided under the meter unit 11. The meter visor 14 is provided in front of the meter unit 12. The vehicle registration plate 13 is attached above the meter visor 14. More specifically, the vehicle registration plate 13 is provided in front of the meter unit 11 and above the headlight unit 12. The meter visor 14 is provided between the meter unit 11 and the vehicle registration plate 13.

### Headlight Unit

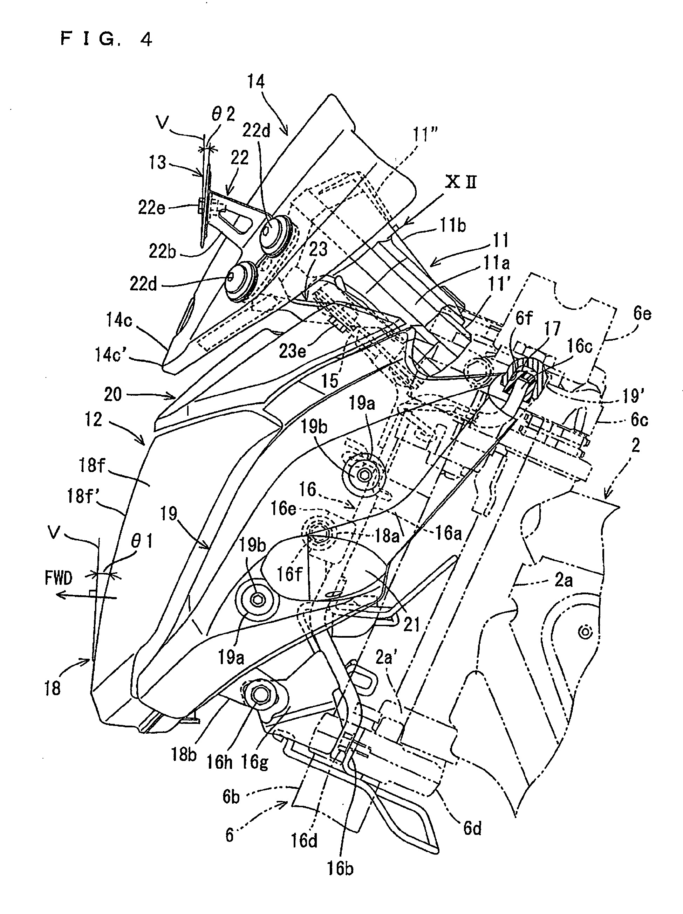

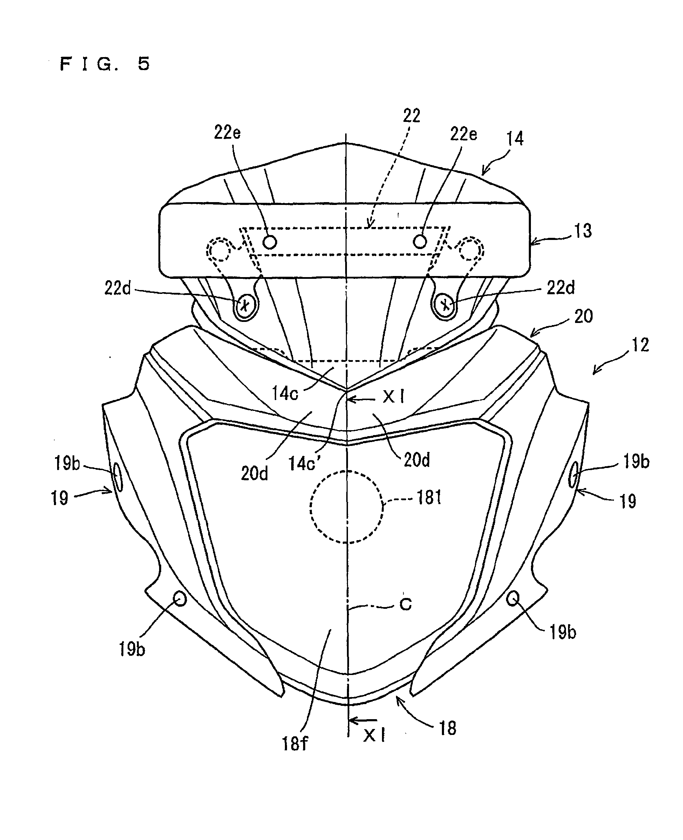

Referring to Figs. 4 to 6, the headlight unit 12 includes a headlight 18, right and left side covers 19, and a top cover 20. As shown in Fig. 5, the headlight 18 is provided in the center of the headlight unit 12. As shown in Figs. 4 to 6, the left side cover 19 is provided on the left side of the headlight unit 12 and extends to the vicinity of the upper end of the front fork 6 from the left edge of the headlight 18. The right side cover 19 is formed symmetrically to the left side cover 19 with respect to the central line C of the motorcycle. The top cover 20 is provided on the upper side of the headlight unit 12 and extends to the vicinity of the back surface of the meter unit 11 from the upper edge of the headlight 18. The upper edge of the left side cover 19 is connected to the left edge of the top cover 20. The upper edge of the right side cover 19 is connected to the right edge of the top cover 20.

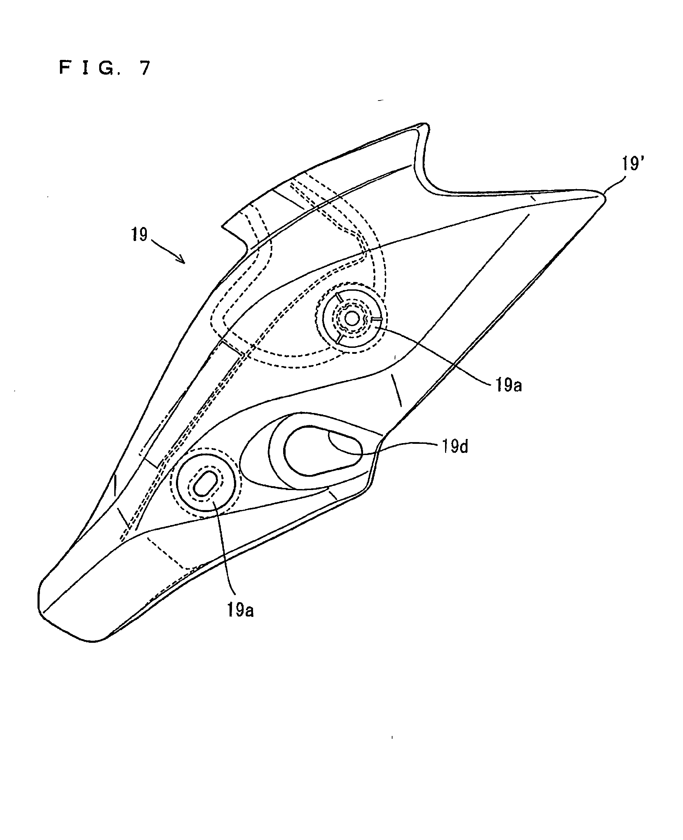

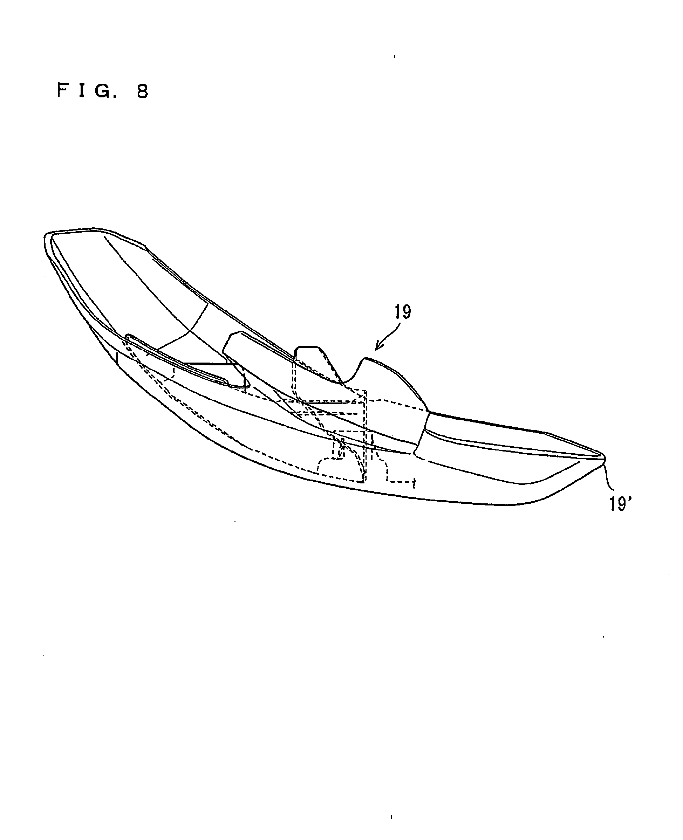

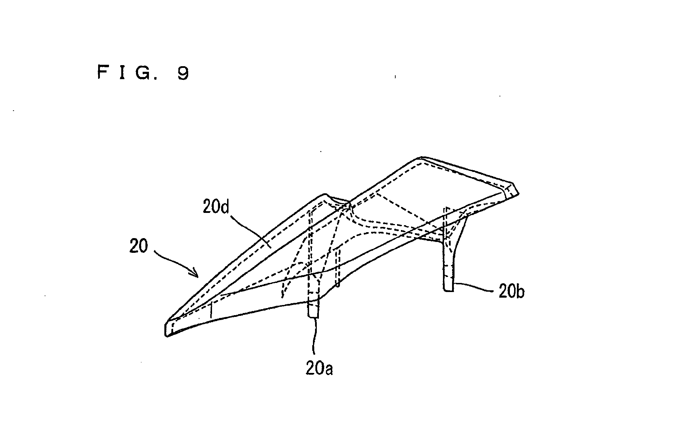

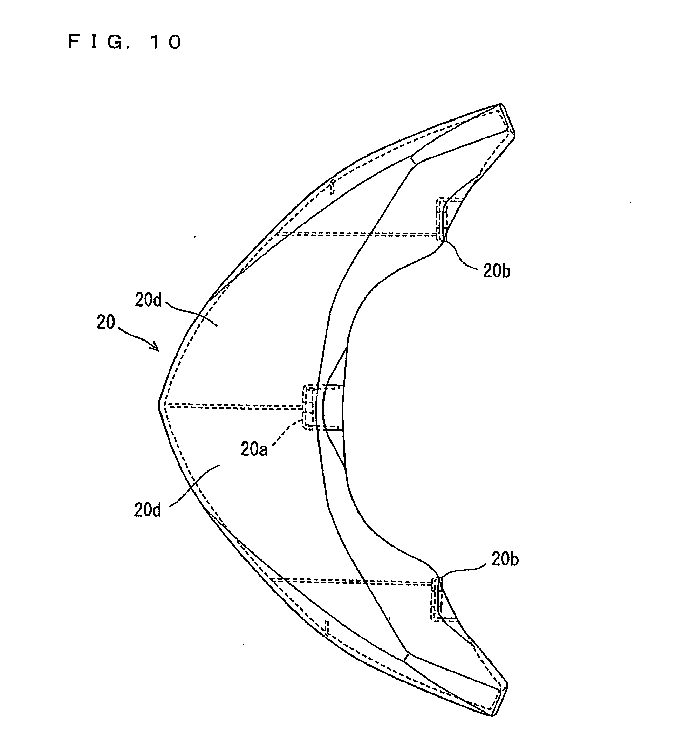

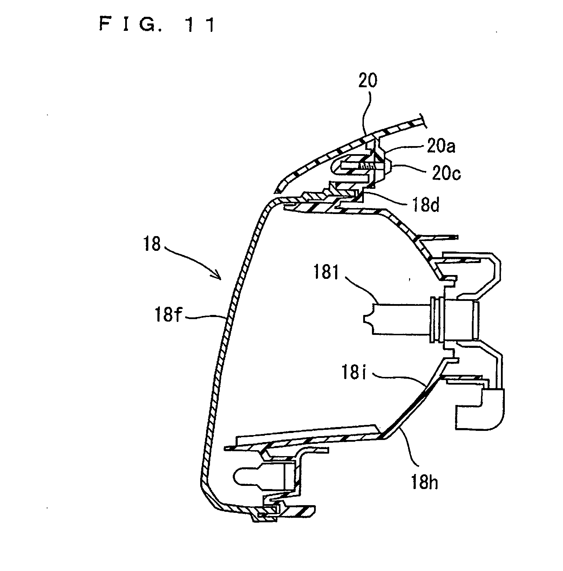

As shown in Figs. 7 and 8, the left side cover 19 has two countersink holes 19a. The side cover 19 also has an attachment hole 19d for the left winker 21. Similarly, the right side cover 19 has two countersink holes (not shown) and an attachment hole (not shown) for the right winker 21. A bolt 19b is laterally inserted into the countersink hole 19a and screwed to the light case 18h (Fig. 11) of the headlight 18 that will be described. In this way, the side cover 19 is attached to the headlight 18. The top cover 20 has a central attachment member 20a and a pair of right and left attachment members 20b as shown in Figs. 9 and 10.

As shown in Fig. 4, the rear end 19' of the side cover 19 is provided above the lower end 2a' of the head pipe 2a when viewed from a lateral side of the motorcycle. Therefore, the headlight unit 12 may be provided as near as possible to the head pipe 2a.

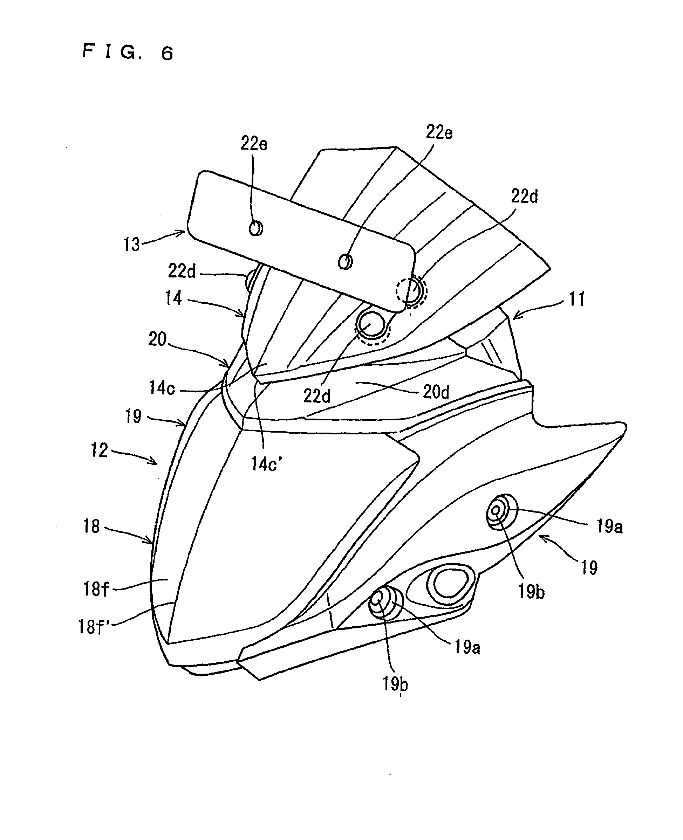

As shown in Figs. 5 and 6, the top cover 20 has downward recesses 20d. The recesses 20d are formed symmetrically with respect to the central line C of the motorcycle.

As shown in Fig. 11, the headlight 18 includes a light case 18h, a transparent cover 18f, and a light bulb 181. The transparent cover 18f is provided to cover the front opening of the light case 18h. The light bulb 181 is a light source and provided in the light case 18h. The periphery of the light bulb 181 at the inner surface of the light case 18h has a reflection surface 18i. As shown in Fig. 5, the light bulb 181 is provided in the center in the widthwise direction of the motorcycle, in other words, on the central line C of the motorcycle.

As shown in Fig. 11, a central support member 18d is formed above the light case 18h. The central attachment member 20a of the top cover 20 shown in Figs. 9 and 10 is screwed to the central support member 18d of the light case 18h by a bolt 20c. Although not shown, the right and left attachment members 20b of the top cover 20 shown in Figs. 9 and 10 are similarly screwed to the right and left support members of the light case 18h by bolts. In this way, the top cover 20 is attached to the headlight 18.

### Meter Unit

Referring to Fig. 4, the meter unit 11 is attached to the front fork 6. The rear end 11' of the meter unit 11 is positioned substantially immediately above the lower end 2a' of the head pipe 2a. Therefore, the meter unit 11 may be provided as near as possible to the head pipe 2a.

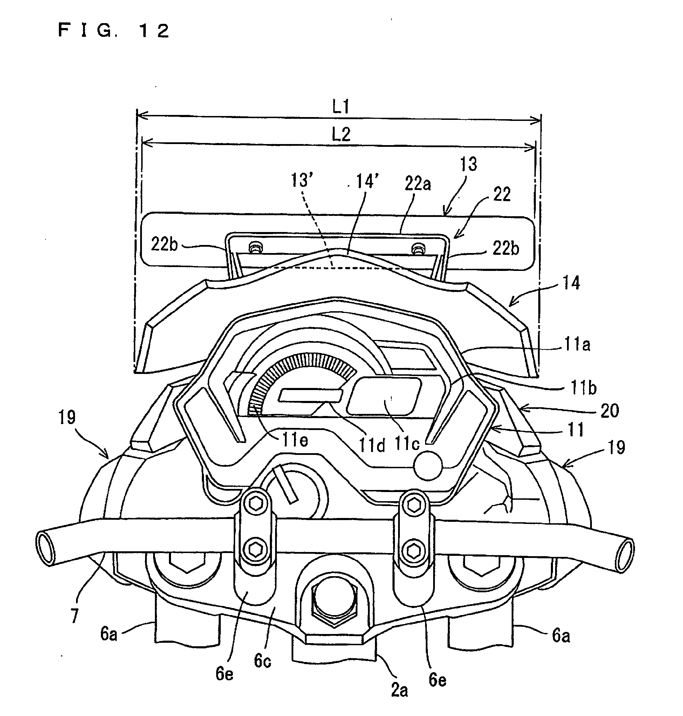

Referring to Fig. 12, the meter unit 11 includes a meter case 11a and a meter panel 11b. The meter panel 11b is provided in the meter case 11a. As shown in Fig. 5, the meter panel 11b stores meters such as a speed meter 11c, an odometer 11d, and a tachometer 11e.

### Meter Visor

Referring to Figs. 4 to 6, the meter visor 14 is provided above the top cover 20 of the headlight unit 12. The meter visor 14 is curved to surround the front portion 11" of the meter unit 11. As shown in Fig. 4, the meter visor 14 overlaps the front portion 11" of the meter unit 11 when viewed from a lateral side of the motorcycle. As shown in Figs. 4 and 6, the lower portion 14c of the meter visor 14 is positioned in front of the vehicle registration plate 13. As shown in Fig. 4, when viewed in the orthogonal direction VII to the meter panel 11b, the meter visor 14 overlaps the vehicle registration plate 13 in the center of the motorcycle widthwise direction as shown in Fig. 12. More specifically, the central portion 13' of the vehicle registration plate 13 is shielded by the central portion 14' of the meter visor 14. The size L2 of the meter visor 14 in the motorcycle widthwise direction is equal to or longer than the size L1 of the vehicle registration plate 13. The meter visor 14 prevents sunlight from lowering the visibility of the meter unit 11 and light from the headlight 18 from being reflected by the back surface of the vehicle registration plate 13 to get into the rider's eyes.

As shown in Fig. 4, when viewed from a lateral side of the motorcycle, the meter visor 14 is provided above the side cover 19. Therefore, the meter visor 14 may be provided as near as possible to the head pipe 2a. As shown in Fig. 5, the lower part 14c of the meter visor 14 overlaps the recesses 20d of the top cover 20 when viewed from the front of the motorcycle. The lowermost end 14c' of the meter visor 14 is provided on the central line C of the motorcycle. Therefore, the meter visor 14 may be provided as near as possible to the meter unit 11.

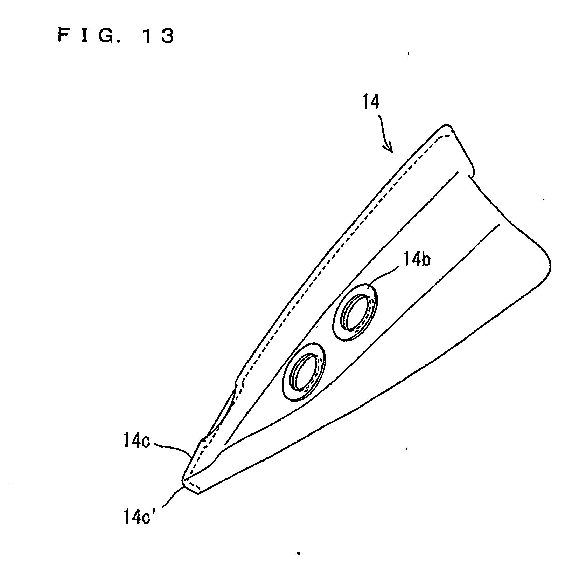

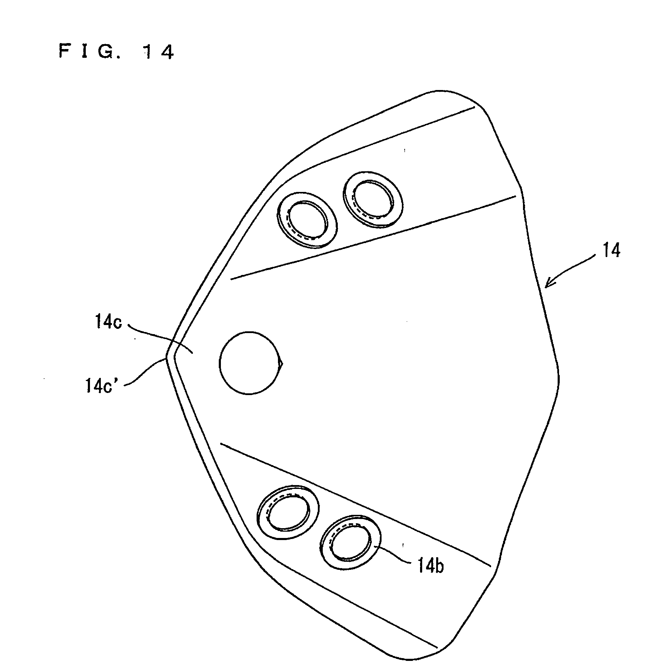

As shown in Figs. 13 and 14, the meter visor 14 has two attachment holes 14b each in the left part and the right part. The meter visor 14 is provided between the meter unit 11 and the vehicle registration plate 13 and above the headlight 18.

### Vehicle Registration Plate

As shown in Figs. 4 to 6, the vehicle registration plate 13 is a thin rectangular plate. The vehicle registration plate 13 has longer sides provided along the widthwise direction of the motorcycle and shorter sides provided substantially along the vertical direction V As shown in Fig. 4, the vehicle registration plate 13 is provided above the side cover 19 when viewed from a lateral side of the motorcycle. The back surface of the vehicle registration plate 13 may be coated with black plating in order to reduce the reflection of light from the headlight 18.

As shown in Fig. 4, the front edge 18f' (positioned on the center line C in the motorcycle widthwise direction in Fig. 5) of the transparent cover 18f of the headlight 18 is inclined at least at an angle θ1 with respect to the vertical line V When viewed from a lateral side of the motorcycle, the vehicle registration plate 13 is inclined backward at an angle θ2 with respect to the vertical line V The angle θ2 is smaller than the angle θ1. More specifically, the vehicle registration plate 13 is provided substantially in the vertical direction.

As shown in Fig. 4, when viewed from a lateral side of the motorcycle, the vehicle registration plate 13 is provided above the side cover 19. Therefore, the vehicle registration plate 13 may be provided as near as possible to the head pipe 2a.

### Headlight Stay

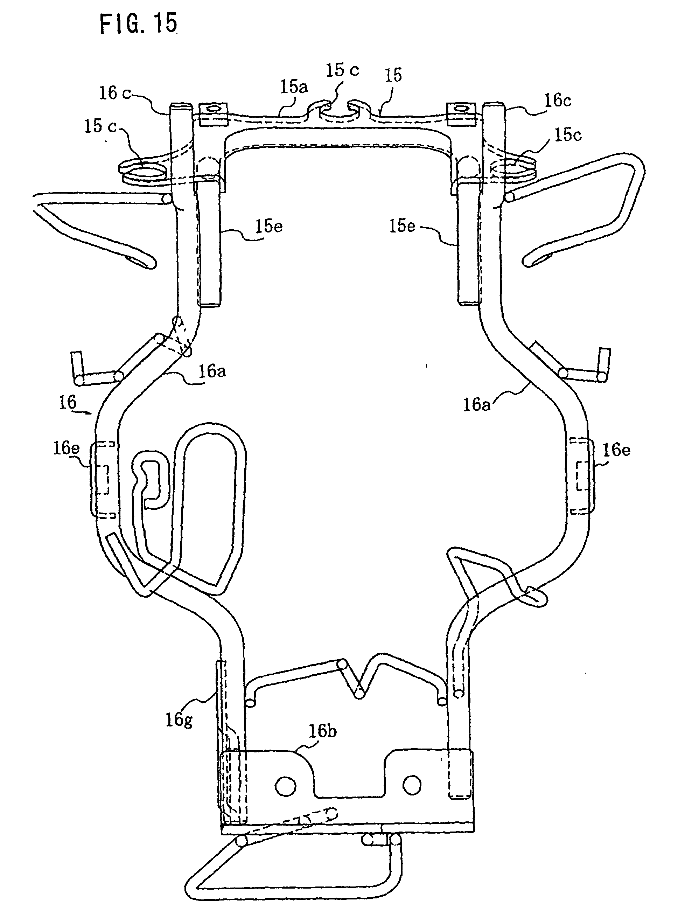

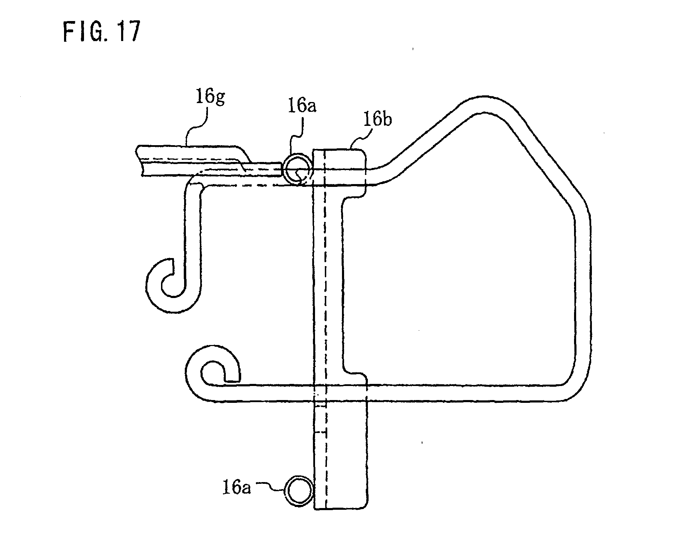

The motorcycle 1 further includes a headlight stay 16 and a meter bracket 15 shown in Figs. 15 to 17. As shown in Fig. 4, the headlight stay 16 is a component used to attach the headlight unit 12 to the front fork 6.

As shown in Fig. 15, the headlight stay 16 includes a pair of right and left round rods 16a and a coupling plate 16b. The round rods 16a extend in the vertical direction. The coupling plate 16b is fixed at the lower ends of the round rods 16a. The connecting rod 15e of the meter bracket 15 that will be described is welded to the upper ends of the round rods 16a. The headlight stay 16 and the meter bracket 15 have substantially a rectangular shape when viewed from the front. The round rods 16a have their upper ends bent backward to form engagement portions 16c. As shown in Fig. 4, the lower surface of the upper bracket 6c of the front fork 6 has an engagement recess 6f. The engagement portion 16c is secured to the engagement recess 6f through a damper 17. The coupling plate 16b is fixed to the lower bracket 6d of the front fork 6 by a bolt 16d. In this way, the headlight stay 16 is attached to the front fork 6.

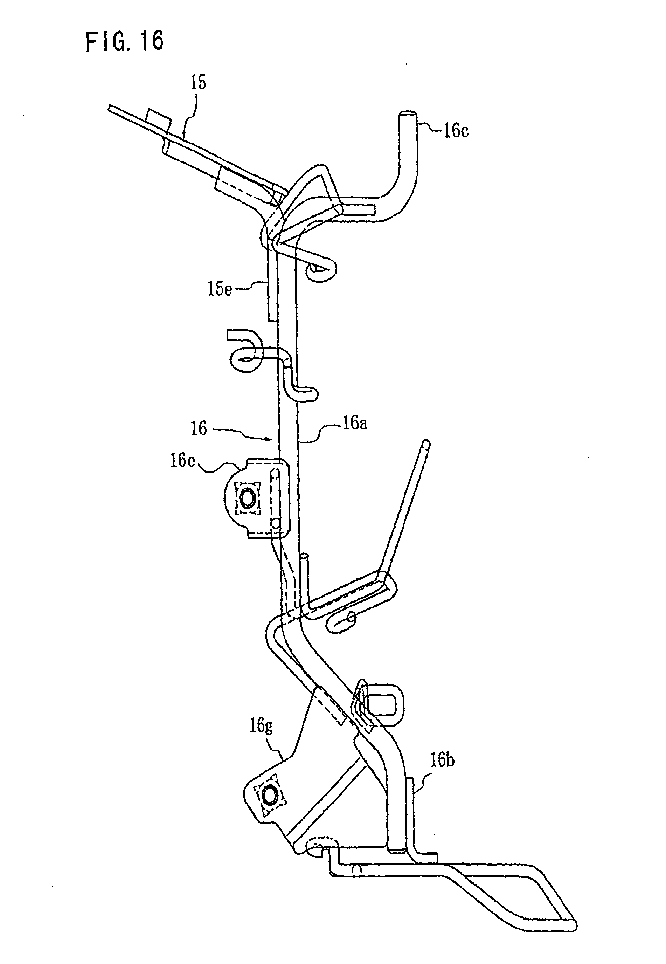

As shown in Figs. 15 and 16, the headlight stay 16 further includes a pair of right and left support members 16e. As shown in Fig. 4, attachment members 18a are provided in the right and left parts of the headlight 18. A bolt 16f is inserted laterally into the attachment hole of the attachment member 18a and screwed to the support member 16e of the headlight stay 16.

As shown in Figs. 15 to 17, the headlight stay 16 further includes a pair of right and left support members 16g. As shown in Fig. 4, an adjuster 18b is formed in the left part of the bottom of the headlight 18. The adjuster 18b is attached to the support member 16g of the headlight stay 16 by a bolt 16h. The bolt 16h is inserted laterally in an elongate hole formed in the adjuster 18b and screwed to the support member 16g of the headlight stay 16. When the bolt 16h is loosened, the entire headlight unit 12 can be rotated around the bolt 16f. In this way, the optical axis of the headlight 18 can be adjusted.

### Meter Bracket

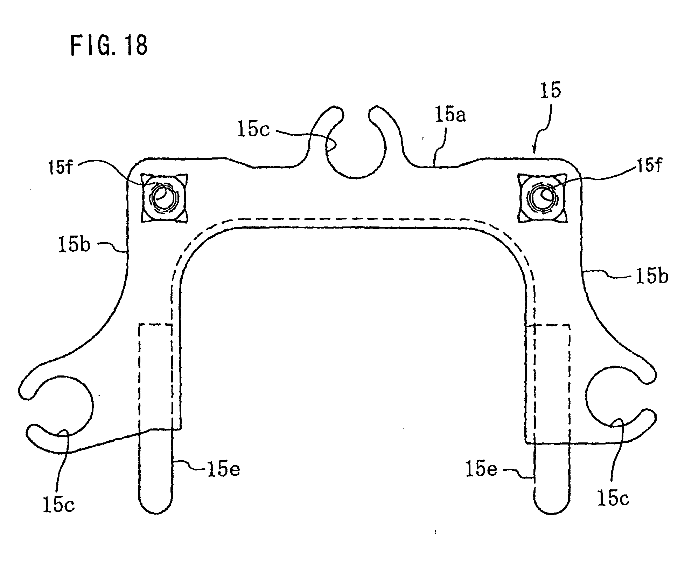

As shown in Fig. 4, the meter bracket 15 is a component used to attach the meter unit 11 to the front fork 6. As shown in Fig. 18, the meter bracket 15 includes a front side 15a and a pair of right and left sides 15b. The meter bracket 15 is made of a sheet metal and substantially C-shaped when viewed in a plan view.

As shown in Figs. 15, 16, and 18, the meter bracket 15 further includes a pair of right and left connecting rods 15e. The connecting rods 15e are welded to the upper ends of the round rods 16a of the headlight stay 16, so that the meter bracket 15 is coupled to the headlight stay 16.

As shown in Figs. 15 and 18, attachment holes 15c are formed at the central part of the front side 15a and the rear ends of the sides 15b. As shown in Fig. 4, a bolt 15d is inserted into the attachment hole 15c from below and fastened to the bottom of the meter case 11a. In this way, the meter unit 11 is attached to the meter bracket 15. Therefore, the meter unit 11 is attached to the front fork 6 through the meter bracket 15 and the headlight stay 16.

### Visor Bracket

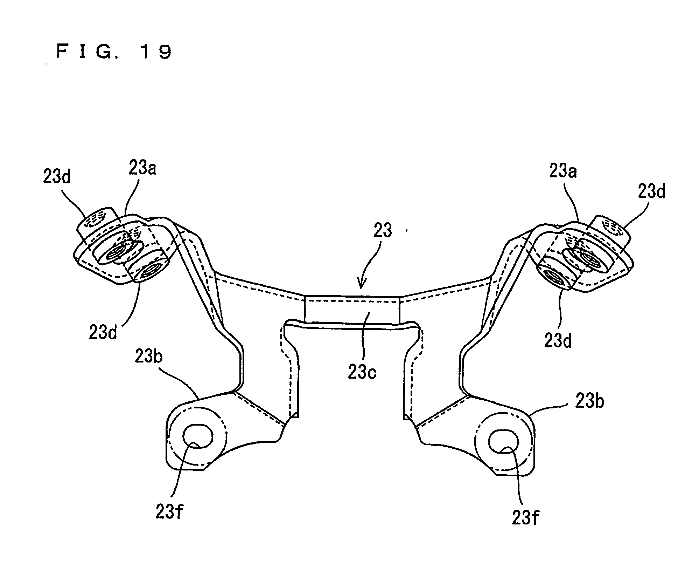

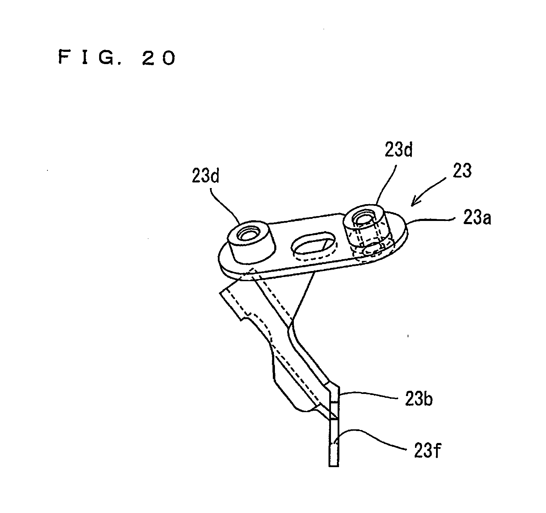

The motorcycle 1 further includes a visor bracket 23 shown in Figs. 19 and 20. As shown in Fig. 4, the visor bracket 23 is a component used to attach the meter visor 14 to the meter bracket 15.

As shown in Figs. 19 and 20, the visor bracket 23 includes a pair of right and left support members 23a, a pair of right and left coupling members 23b, and a coupling member 23c used to couple them. The support members 23a each have two collars 23d used to attach the vehicle registration plate 13 and the meter visor 14. The coupling members 23b each have an attachment hole 23f. A bolt 23e is inserted into the attachment hole 23f of the visor bracket 23 from below and screwed to the screw hole 15f of the bracket 15. In this way, the visor bracket 23 is attached to the meter bracket 15.

### Plate Bracket

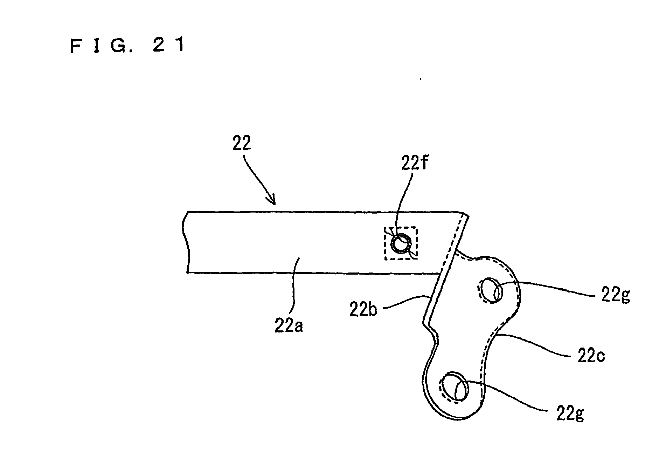

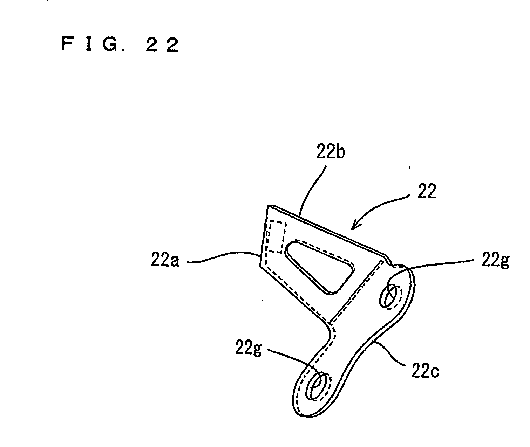

The motorcycle 1 further includes a plate bracket 22 as shown in Figs. 21 and 22. As shown in Figs. 4 and 5, the plate bracket 22 is a component used to attach the vehicle registration plate 13 to the meter visor 14.

As shown in Figs. 21 and 22, the plate bracket 22 includes a plate attachment portion 22a, a pair of right and left legs 22b, and a pair of right and left coupling members 22c. The plate attachment member 22a is a strip shaped plate that extends in the motorcycle widthwise direction. The plate attachment portion 22a has two screw holes 22f in the right and the left parts. The right and left ends of the plate attachment portion 22a are bent backward to form the legs 22b. The legs 22b are further bent outward in the motorcycle widthwise direction to form the coupling members 22c. The coupling members 22c each have two attachment holes 22g.

As shown in Figs. 4 to 6, bolts 22e are inserted into the attachment holes (not shown) of the vehicle registration plate 13 from the front and screwed to the screw holes 22f of the plate bracket 22. Therefore, the vehicle registration plate 13 is attached to the plate bracket 22 by the bolts 22e.

As shown in Figs. 4 to 6, bolts 22d are inserted into the attachment holes 22g (Figs. 21 to 22) of the plate bracket 22 from above and further into the attachment holes 14b (Figs. 13 and 14) of the meter visor 14 and screwed to the collars 23d (Figs. 19 and 20) of the visor bracket 23. Therefore, the plate bracket 22 and the meter visor 14 are attached to the visor bracket 23 by the bolts 22d. As a result, the vehicle registration plate 13 is attached to the front fork 6 through the plate bracket 22, the visor bracket 23, and the headlight stay 16. The meter visor 14 is attached to the front fork 6 through the visor bracket 23 and the headlight stay 16.

As described above, the meter unit 11, the headlight unit 12, the vehicle registration plate 13, and the meter visor 14 are attached to the headlight stay 16 to form a unit and attached to the front fork 6 together as the unit.

### Effects of the Preferred Embodiment

According to the present preferred embodiment, the vehicle registration plate 13 is attached above the meter visor 14, so that the vehicle registration plate 13 does not come within sight of the rider. Furthermore, the vehicle registration plate 13 does not get in the way, when the headlight unit 12 and the meter unit 11 are positioned close to the center of gravity of the motorcycle 1.

The meter visor 14 overlaps the vehicle registration plate 13 in the center of the motorcycle widthwise direction from a view point in the orthogonal direction XII to the meter panel 11b. Therefore, if light from the light bulb 181 of the headlight 18 is reflected by the back surface of the vehicle registration plate 13, the light hardly comes in the rider's eyes.

The lower portion 14c of the meter visor 14 is positioned in front of the vehicle registration plate 13. Therefore, light from the headlight 18 is shielded by the lower portion 14c of the meter visor 14 and unlikely to reach the back surface of the vehicle registration plate 13.

The size L2 of the meter visor 14 in the motorcycle widthwise direction is equal to or larger than the size L1 of the vehicle registration plate 13 in the motorcycle widthwise direction. Therefore, if light from the headlight 18 is reflected by the back surface of the vehicle registration plate 13, the light hardly comes in the rider's eyes.

When viewed from a lateral side of the motorcycle, the central line C of the transparent cover 18f of the headlight 18 in the motorcycle widthwise direction is inclined at an angle θ1 or more with respect to the vertical line V, and the vehicle registration plate 13 is inclined backward at an angle θ2 that is smaller than the angle θ1 with respect to the vertical line V Therefore, light from the headlight 18 hardly reaches the back surface of the vehicle registration plate 13.

When viewed from a lateral side of the motorcycle, the meter visor 14 overlaps the front portion 11" of the meter unit 11, and sunlight hardly reaches the meter panel 11b.

Since the rear end 11" of the meter unit 11 is positioned substantially immediately above the lower end 2a' of the head pipe 2a, the meter unit 11 may be provided close to the center of gravity of the motorcycle 1.

The headlight unit 12, the meter unit 11, and the meter visor 14 are attached to the headlight stay 16, and the vehicle registration plate 13 is attached above the meter visor 14. Therefore, these four components 11 to 14 may be attached to the head stay 16 in advance to form a unit and may be attached to the front fork 6 together as the unit. Furthermore, when the handle 7 is turned to the right or left, the four components 11 to 14 are turned together with the front fork 6, and therefore these four components 11 to 14 do not collide against one another.

When viewed from the front of the motorcycle, the lower portion 14c of the meter visor 14 overlaps the recesses 20d of the top cover 20. Therefore, the top cover 20 does not get in the way when the meter visor 14 is positioned close to the center of gravity of the motorcycle 1.

When viewed from a lateral side of the motorcycle, the rear end 19' of the side cover 19 is provided above the lower end 2a' of the head pipe 2a, and the meter visor 14 and the vehicle registration plate 13 are provided above the side cover 19. Therefore, the side cover 19, the meter visor 14, and the vehicle registration plate 13 may be provided close to the center of gravity of the motorcycle 1.

## Claims

1. A motorcycle (1), comprising:
a head pipe (2a);
a headlight unit (12) provided in front of the head pipe (2a) and including a headlight (18);
a meter unit (11) provided above the head pipe (2a) and including a meter panel (11b);
a meter visor (14) provided in front of the meter unit (11); and
a vehicle registration plate (13);
**characterized in that**
the vehicle registration plate (13) is attached above the meter visor (14).

2. The motorcycle (1) according to claim 1, wherein the headlight (18) comprises a light source (181) provided in the center in the widthwise direction of the motorcycle, and
from a view point in the orthogonal direction (XII) to the meter panel (11b), the meter visor (14) overlaps the vehicle registration plate (13) in the center in the widthwise direction of the motorcycle.

3. The motorcycle (1) according to claim 1, wherein the meter visor (14) has a lower portion (14c) positioned in front of the vehicle registration plate (13).

4. The motorcycle (1) according to claim 1, wherein in the widthwise direction of the motorcycle, the meter visor (14) has a size (L2) equal to or larger than the size (L1) of the vehicle registration plate (13).

5. The motorcycle (1) according to claim 1, wherein the headlight (18) comprises a transparent cover (18f) provided at a front surface of the headlight (18), and
when viewed from a lateral side of the motorcycle, the central line (C) of the transparent cover (18f) in the widthwise direction of the motorcycle is inclined backward at least at a first angle (θ1) with respect to the vertical line (V), and the vehicle registration plate (13) is inclined backward at an angle (θ2) smaller than the first angle (θ1) with respect to the vertical line (V).

6. The motorcycle (1) according to claim 1, wherein the meter visor (14) overlaps at least a part (11") of the meter unit (11) when viewed from a lateral side of the motorcycle.

7. The motorcycle (1) according to claim 1, wherein the head pipe (2a) has a lower end (2a'), and
the meter unit (11) has a rear end (11') positioned substantially immediately above the lower end (2a') of the head pipe (2a).

8. The motorcycle (1) according to claim 1, further comprising a front fork (6) supported rotatably at the head pipe (2a), and
the headlight unit (12), the meter unit (11), and the meter visor (14) are attached to the front fork (6).

9. The motorcycle (1) according to claim 8, further comprising a headlight stay (16) attached to the front fork (6), wherein the headlight unit (12), the meter unit (11), and the meter visor (14) are attached to the headlight stay (16).

10. The motorcycle (1) according to claim 1, wherein the headlight unit (12) comprises a top cover (20) provided on an upper side of the headlight unit (12),
the top cover (20) comprises a downward recess (20d), and
the meter visor (14) has a lower portion (14c) that overlaps the recess (20d) of the top cover (20) when viewed from the front of the motorcycle.

11. The motorcycle (1) according to claim 1, wherein the head pipe (2a) has a lower end (2a'),
the headlight unit (12) comprises a side cover (19) provided at a lateral side of the headlight unit (12),
the side cover (19) has a rear end (19') provided above the lower end (2a') of the head pipe (2a) when viewed from a lateral side of the motorcycle, and
the meter visor (14) and the vehicle registration plate (13) are provided above the side cover (19) when viewed from a lateral side of the motorcycle.

## Patentansprüche

1. Ein Motorrad (1), das folgende Merkmale umfasst:
eine Hauptleitung (2a);
eine Scheinwerfereinheit (12), die vor der Hauptleitung (2a) vorgesehen ist und einen Scheinwerfer (18) umfasst;
eine Messinstrumenteinheit (11), die über der Hauptleitung (2a) angeordnet ist und eine Messinstrumenttafel (11b) umfasst;
eine Messinstrumentblende (14), die vor der Messinstrumenteinheit (11) vorgesehen ist; und
ein Fahrzeugnummernschild (13);
**dadurch gekennzeichnet, dass**
das Fahrzeugnummernschild (13) über der Messinstrumentblende (14) befestigt ist.

2. Das Motorrad (1) gemäß Anspruch 1, bei dem der Scheinwerfer (18) eine Lichtquelle (181) umfasst, die in der Breiterichtung des Motorrads in der Mitte vorgesehen ist, und
von der orthogonalen Richtung (XII) zu der Messinstrumenttafel (11b) aus gesehen die Messinstrumentblende (14) das Fahrzeugnummernschild (13) in der Breiterichtung des Motorrads in der Mitte überlappt.

3. Das Motorrad (1) gemäß Anspruch 1, bei dem die Messinstrumentblende (14) einen unteren Abschnitt (14c) aufweist, der vor dem Fahrzeugnummernschild (13) positioniert ist.

4. Das Motorrad (1) gemäß Anspruch 1, bei dem die Messinstrumentblende (14) in der Breiterichtung des Motorrads eine Größe (L2) gleich oder größer der Größe (L1) des Fahrzeugnummernschilds (13) aufweist.

5. Das Motorrad (1) gemäß Anspruch 1, bei dem der Scheinwerfer (18) eine transparente Abdeckung (18f) umfasst, die an einer vorderen Oberfläche des Scheinwerfers (18) vorgesehen ist, und
von einer Querseite des Motorrads aus gesehen die Mittellinie C der transparenten Abdeckung (18f) in der Breiterichtung des Motorrads zumindest in einem ersten Winkel (θ1) bezüglich der vertikalen Linie (V) nach hinten geneigt ist, und das Fahrzeugnummernschild (13) in einem Winkel (θ2), der kleiner ist als der erste Winkel (θ1), bezüglich der vertikalen Linie (V) nach hinten geneigt ist.

6. Das Motorrad (1) gemäß Anspruch 1, bei dem die Messinstrumentblende (14) von der Querseite des Motorrads aus gesehen zumindest einen Teil (11'') der Messinstrumenteinheit (11) überlappt.

7. Das Motorrad (1) gemäß Anspruch 1, bei dem die Hauptleitung (2a) ein unteres Ende (2a') aufweist, und
die Messinstrumenteinheit (11) ein hinteres Ende (11') aufweist, das im Wesentlichen genau über dem unteren Ende (2a') der Hauptleitung (2a) positioniert ist.

8. Das Motorrad (1) gemäß Anspruch 1, das ferner eine Vordergabel (6) umfasst, die drehbar an der Hauptleitung (2a) getragen wird, und
wobei die Scheinwerfereinheit (12), die Messinstrumenteinheit (11) und die Messinstrumentblende (14) an der Vordergabel (6) befestigt sind.

9. Das Motorrad (1) gemäß Anspruch 8, das ferner eine Scheinwerferstütze (16) umfasst, die an der Vordergabel (6) befestigt ist, wobei die Scheinwerfereinheit (12), die Messinstrumenteinheit (11) und die Messinstrumentblende (14) an der Scheinwerferstütze (16) befestigt sind.

10. Das Motorrad (1) gemäß Anspruch 1, bei dem die Scheinwerfereinheit (12) eine obere Abdeckung (20) umfasst, die auf einer oberen Seite der Scheinwerfereinheit (12) vorgesehen ist,
wobei die obere Abdeckung (20) eine nach unten gerichtete Ausnehmung (20d) umfasst, und
die Messinstrumentblende (14) einen unteren Abschnitt (14c) aufweist, der die Ausnehmung (20d) der oberen Abdeckung (20) von der Vorderseite des Motorrads aus gesehen überlappt.

11. Das Motorrad (1) gemäß Anspruch 1, bei dem die Hauptleitung (2a) ein unteres Ende (2a') aufweist,
die Scheinwerfereinheit (12) eine Seitenabdeckung (19) umfasst, die an einer Querseite der Scheinwerfereinheit (12) vorgesehen ist,
die Seitenabdeckung (19) ein hinteres Ende (19') aufweist, das von einer Querseite des Motorrads aus gesehen über dem unteren Ende (2a') der Hauptleitung (2a) vorgesehen ist, und
die Messinstrumentblende (14) und das Fahrzeugnummernschild (13) von einer Querseite des Motorrads aus gesehen über der Seitenabdeckung (19) vorgesehen sind.

## Revendications

1. Motocyclette (1), comprenant:
un tuyau principal (2a);
une unité de phare (12) prévue devant le tuyau principal (2a) et comportant un phare (18);
une unité de compteur (11) prévue au-dessus du tuyau principal (2a) et comportant un panneau de compteur (11b);
un viseur de compteur (14) prévu devant l'unité de compteur (11); et
une plaque d'immatriculation de véhicule (13);
**caractérisée par le fait que**
la plaque d'immatriculation de véhicule (13) est attachée au-dessus du viseur de compteur (14).

2. Motocyclette (1) selon la revendication 1, dans laquelle le phare (18) comprend une source de lumière (181) prévue au centre dans le sens de la largeur de la motocyclette, et
d'un point de vue dans le sens orthogonal (XII) au panneau de compteur (11b), le viseur de compteur (14) vient en recouvrement avec la plaque d'immatriculation de véhicule (13) au centre dans le sens de la largeur de la motocyclette.

3. Motocyclette (1) selon la revendication 1, dans laquelle le viseur de compteur (14) présente une partie inférieure (14c) positionnée devant la plaque d'immatriculation de véhicule (13).

4. Motocyclette (1) selon la revendication 1, dans laquelle, dans le sens de la largeur de la motocyclette, le viseur de compteur (14) présente une dimension (L2) égale ou supérieure à la dimension (L1) de la plaque d'immatriculation de véhicule (13).

5. Motocyclette (1) selon la revendication 1, dans laquelle le phare (18) comprend un couvercle transparent (18f) prévu sur une surface avant du phare (18) et,
lorsque vu d'un côté latéral de la motocyclette, la ligne centrale (C) du couvercle transparent (18f) dans le sens de la largeur de la motocyclette est inclinée vers l'arrière au moins selon un premier angle (θ1) par rapport à la ligne verticale (V), et la plaque d'immatriculation de véhicule (13) inclinée vers l'arrière selon un angle (θ2) inférieur au premier angle (θ1) par rapport à la ligne verticale (V).

6. Motocyclette (1) selon la revendication 1, dans laquelle le viseur de compteur (14) vient en recouvrement avec au moins une partie (11") de l'unité de compteur (11) lorsque vu d'un côté latéral de la motocyclette.

7. Motocyclette (1) selon la revendication 1, dans laquelle le tuyau principal (2a) présente une extrémité inférieure (2a'), et
l'unité de compteur (11) présente une extrémité arrière (11') positionnée sensiblement immédiatement au-dessus de l'extrémité inférieure (2a') du tuyau principal (2a).

8. Motocyclette (1) selon la revendication 1, comprenant par ailleurs une fourche avant (6) supportée de manière rotative au tuyau principal (2a), et
l'unité de phare (12), l'unité de compteur (11) et le viseur de compteur (14) sont attachés à la fourche avant (6).

9. Motocyclette (1) selon la revendication 8, comprenant par ailleurs un support de phare (16) attaché à la fourche avant (6), dans laquelle l'unité de phare (12), l'unité de compteur (11) et le viseur de compteur (14) sont attachés au support de phare (16).

10. Motocyclette (1) selon la revendication 1, dans laquelle l'unité de phare (12) comprend un couvercle supérieur (20) prévu sur un côté supérieur de l'unité de phare (12),
le couvercle supérieur (20) comprend un évidement vers le bas (20d), et
le viseur de compteur (14) présente une partie inférieure (14c) qui vient en recouvrement avec l'évidement (20d) du couvercle supérieur (20) lorsque vu de l'avant de la motocyclette.

11. Motocyclette (1) selon la revendication 1, dans laquelle le tuyau principal (2a) présente une extrémité inférieure (2a'),
l'unité de phare (12) comprend un couvercle latéral (19) prévu d'un côté latéral de l'unité de phare (12),
le couvercle latéral (19) présente une extrémité arrière (19') prévue au-dessus de l'extrémité inférieure (2a') du tuyau principal (2a) lorsque vu d'un côté latéral de la motocyclette, et
le viseur de compteur (14) et la plaque d'immatriculation de véhicule (13) sont prévus au-dessus du couvercle latéral (19) lorsque vu d'un côté latéral de la motocyclette.
